Europäisches Patentamt

European Patent Office

Office européen des brevets

(19)

(11) Numéro de publication : **0 052 545**
**B1**

(12) **FASCICULE DE BREVET EUROPÉEN**

(45) Date de publication du fascicule du brevet :
04.07.84

(51) Int. Cl.³ : **B 60 N 1/02**

(21) Numéro de dépôt : **81401702.6**

(22) Date de dépôt : **27.10.81**

(54) Dispositif de réglage de la position d'un élément déplaçable dans un véhicule, tel qu'un siège.

(30) Priorité : **14.11.80 FR 8024212**

(43) Date de publication de la demande :
**26.05.82 Bulletin 82/21**

(45) Mention de la délivrance du brevet :
**04.07.84 Bulletin 84/27**

(84) Etats contractants désignés :
**DE GB IT SE**

(56) Documents cités :
**FR-A- 2 447 494**
**GB-A- 159 913**
**US-A- 2 953 934**
**US-A- 3 404 580**
**US-A- 3 499 344**
**US-A- 4 041 795**

(73) Titulaire : **COMPAGNIE INDUSTRIELLE DE MECANIS-MES en abrégé C.I.M. Société dite:**
**6, Rue Barbès**
**F-92302 Levallois-Perret (FR)**

(72) Inventeur : **Chevance, Claude Paul**
**12 bis, rue Bergonié**
**91600 Savigny (FR)**
Inventeur : **Laurent, Benoit**
**107 rue Louis Rouguier**
**92300 Levallois (FR)**

(74) Mandataire : **Bressand, Georges et al**
**c/o CABINET LAVOIX 2 Place d'Estienne d'Orves**
**F-75441 Paris Cedex 09 (FR)**

Jouve, 18, rue St-Denis, 75001 Paris, France

## Description

La présente invention est relative, d'une façon générale, à un dispositif pour le réglage de la position d'éléments déplaçables dans un véhicule automobile ou autre, tels que par exemple le toit ouvrant, le hayon ou le couvercle de coffre arrière. Elle s'applique en particulier au réglage de la position d'un siège d'un tel véhicule.

Le brevet FR-A-2447494 décrit un dispositif de réglage de la position d'un élément déplaçable, tel qu'un siège, dans un véhicule, qui comprend un vérin à vis connecté entre un point fixe solidaire de la carrosserie du véhicule et un point solidaire de l'élément déplaçable et composé d'au moins trois pièces télescopiques dont les filetages respectifs sont à pas contraires, et un dipositif d'entraînement en rotation couplé à une pièce intermédiaire de ce vérin à vis tout en étant déplaçable en translation parallèlement à l'axe du vérin avec cette pièce intermédiaire.

Ceci fournit un dispositif grâce auquel le réglage est continu, dont l'encombrement en hauteur est faible et qui permet de résister aux efforts importants imposés en cas de choc sur le véhicule.

Toutefois, dans les modes de réalisation représentés au brevet précité, la pièce extérieure ou noix du vérin est fermée à son extrémité extérieure pour assurer la fixation de cette pièce à l'élément à déplacer ou à la structure du véhicule. Ceci conduit à un encombrement longitudinal du dispositif, notamment en position d'extension, qui est important.

La présente invention a pour but de modifier cet agencement de façon à réduire l'encombrement longitudinal du dispositif tout en conservant la capacité élevée de résistance aux efforts et la possibilité de déviation angulaire assurées par l'agencement du brevet FR-A-2447494 précité.

A cet effet, l'invention a pour objet un dispositif de réglage, du type ci-dessus, caractérisé en ce que la pièce extérieure du vérin comprend un manchon ouvert à ses deux extrémités et traversé par ladite pièce intermédiaire, et une collerette tangente à ce manchon et montée rotative, perpendiculairement à l'axe du manchon, dans une pièce de fixation fixée à l'élément déplaçable.

Il est à noter que l'ouverture de l'extrémité de la noix ou manchon permet d'entraîner la pièce intermédiaire au moyen d'un câble d'actionnement, ce qui présente des avantages du point de vue de l'implantation du dispositif moteur, manuel ou électrique. Cependant, un entraînement direct de la pièce intermédiaire par un moteur monté coulissant sur la noix peut également être envisagé.

L'invention est exposée ci-après plus en détail à l'aide des dessins annexés qui en représentent seulement un mode d'exécution. Sur ces dessins :

la Figure 1 est une vue en élévation latérale d'un soubassement de siège de véhicule équipé d'un dispositif de réglage conforme à l'invention ;

la Figure 2 est une vue partielle prise en coupe suivant la ligne 2-2 de la Fig. 1 ;

la Figure 3 est une vue prise en coupe suivant la ligne 3-3 de la Fig. 2 ;

les Figures 4 et 5 représentent en élévation la noix d'un vérin à vis et sa pièce de fixation ;

la Figure 6 est une vue partielle en plan de dessus d'une variante du dispositif de réglage suivant l'invention ; et

la Figure 7 est une vue prise en coupe suivant la ligne 7-7 de la Fig. 6.

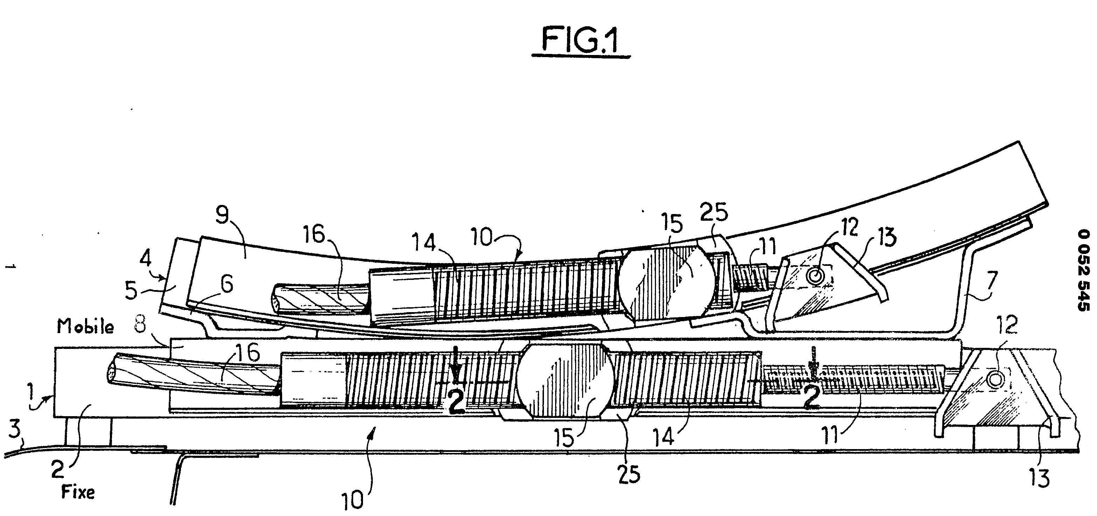

Le soubassement de siège de la Fig. 1 comprend, de chaque côté du siège, deux coulisses superposées constituées chacune de deux profilés emboîtés et d'éléments de roulement interposés entre eux. La coulisse inférieure 1 est rectiligne et destinée au réglage avant-arrière du siège ; son profilé inférieur 2 est fixé au plancher 3 du véhicule. La coulisse supérieure 4, qui sert à la correction d'assiette du siège, est courbe, galbée dans le plan vertical contenant la coulisse 1. Son profilé inférieur 5 est fixé par deux étriers avant 6 et arrière 7 sur l'âme du profilé supérieur 8 de la coulisse 1, et son profilé supérieur 9 est fixé à la face inférieure du siège (non représenté).

Chaque coulisse 1, 4 est équipée pour le déplacement relatif de ses deux profilés d'un dispositif de réglage analogue. Ce dispositif comprend un vérin à vis 10 constitué de trois pièces vissées les unes dans les autres.

La pièce intérieure du vérin 10 est une tige filetée 11 située à l'arrière et dont l'extrémité arrière est articulée par un axe horizontal et transversal 12 à une ferrure 13 fixée, par exemple par soudure, au profilé inférieur 2, 5 de la coulisse considérée.

La pièce intermédiaire du vérin 10 est un manchon tubulaire 14 fileté intérieurement et extérieurement suivant des pas opposés. Sa partie arrière est vissée sur la partie avant de la tige 11, et sa partie centrale est vissée dans la troisième pièce 15 du vérin 10, de laquelle la pièce 14 émerge des deux côtés. Sur l'extrémité avant de la pièce 14 est fixée une extrémité d'un câble de commande 16 dont l'autre extrémité est reliée à un dispositif d'actionnement approprié (non représenté) tel qu'une manivelle ou l'arbre de sortie d'un moteur électrique.

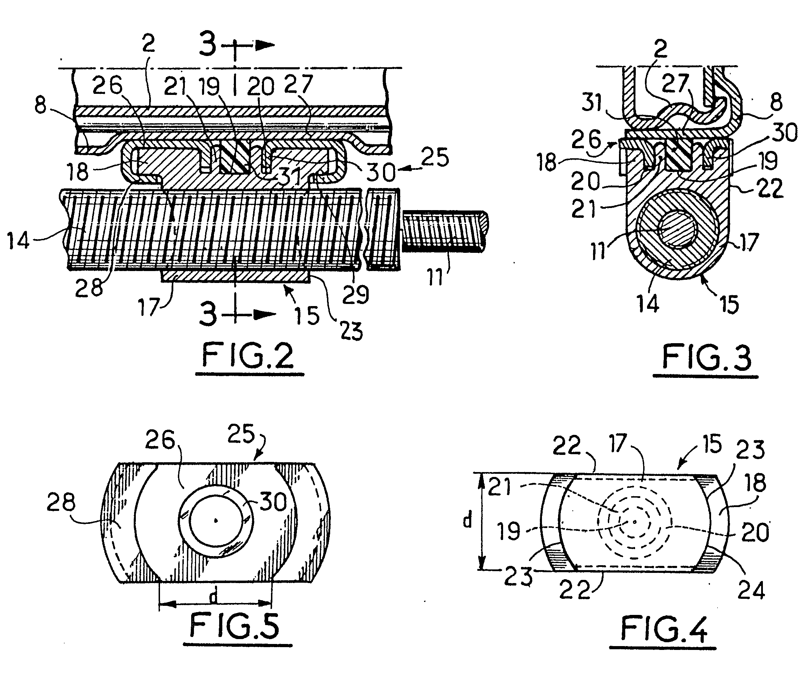

La troisième pièce 15, qui est la pièce extérieure ou noix du vérin 10, comprend (Fig. 2 à 4) un court manchon tubulaire 17 fileté intérieurement, ouvert à ses deux extrémités et portant une collerette latérale tangente 18. Ce manchon et cette collerette ont, vus en élévation suivant une direction perpendiculaire à l'axe du manchon (Fig. 4), la forme de deux cercles concentriques tronqués par deux plans parallèles entre eux et à l'axe desdits cercles, diamétralement opposés et espacés l'un de l'autre d'une distance d (Fig. 4). La face extérieure de la collerette 18 comporte un trou central borgne 19 entouré d'une rainure ou gorge circulaire 20, ce qui définit entre ce trou et cette rainure un collet axial cylindrique 21. La paroi latérale du manchon 17 comporte du côté de la collerette 18 deux surfaces planes 22 raccordées par deux segments cylindriques 23, ce qui définit un épaulement cylindrique tronqué 24 adjacent à la face intérieure de la collerette 18.

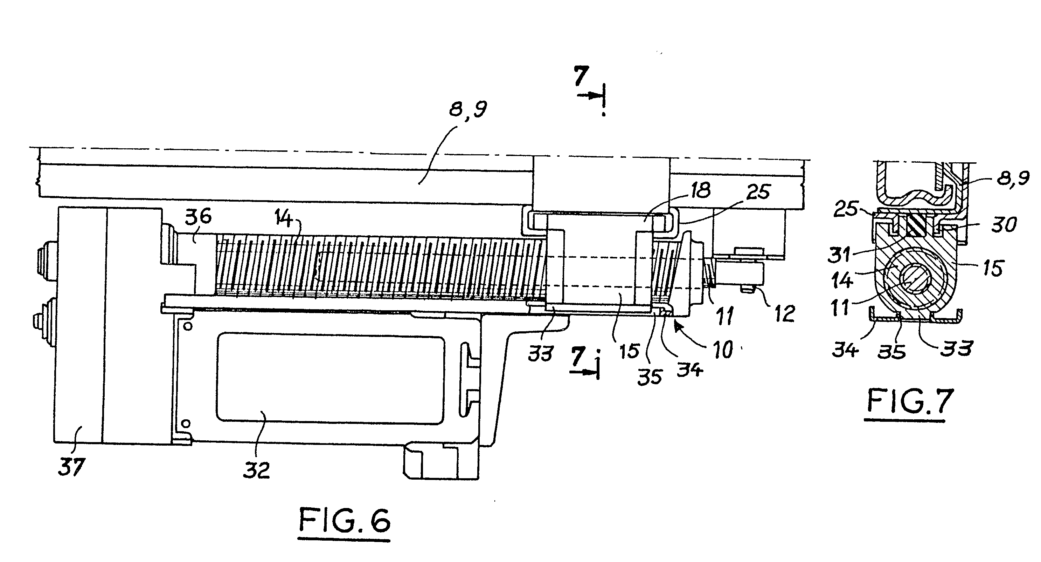

La collerette 18 se monte très facilement, sans aucun outil, dans une coupelle 25 soudée au profilé mobile 8 ou 9 de la glissière 1, 4 correspondante. La coupelle 25 comprend un fond plat 26 soudé sur un plat 27 du profilé 8, 9, et un rebord doublement rabattu 28 présentant une face de retenue 29 parallèle au fond 26 et espacée de ce dernier d'une distance très légèrement supérieure à l'épaisseur de la collerette 18. La coupelle est circulaire mais tronquée de la même façon que cette collerette (Fig. 5), c'est-à-dire par deux plans parallèles. Ces deux plans définissent dans le rebord 28 deux ouvertures diamétralement opposées ayant la largeur d précitée. Dans le fond 26 est embouti vers l'intérieur un collet cylindrique 30.

Pour monter la noix 15, on la place coaxialement et perpendiculairement à la coupelle 25, on introduit la collerette 18 dans l'ouverture du rebord 28, le collet 30 étant alors reçu sans jeu dans la rainure 20, et on tourne la noix 15 de 90°, ce qui emprisonne avec un faible jeu la collerette 18 dans le rebord 28. Pour résorber le jeu axial, un petit cylindre 31 en matière élastique ou en matière plastique, par exemple en polyuréthane, est comprimé entre le fond du trou borgne 19 et le plat 27 du profilé 8, 9 en traversant le collet 30.

Dans cette position, la face 29 du rebord 28 retient la collerette 18, et le collet 30 assure son centrage. La noix 15 peut néanmoins tourner par rapport à la coupelle 25, avec un jeu radial entre l'épaulement 24 et le rebord 28 en regard, et l'axe de son filetage est très voisin du profilé 8, 9.

Si des efforts importants sont exercés sur le siège, en cas de choc et notamment si la ceinture de sécurité est directement ancrée au siège, ces efforts sollicitent le vérin en traction entre la noix 15 et la ferrure 13. Ils sont repris, au niveau de la noix 15, par la soudure de la coupelle 25 et le collet 30 et, si celui-ci cède, par le rebord 28. Le soudage des coupelles 25 peut facilement être effectué de façon à conférer à ces liaisons une résistance mécanique élevée. Les essais ont montré que l'agencement est apte à supporter tous les efforts que l'on peut rencontrer en cas de choc.

La possibilité de rotation de la noix 15 est intéressante non seulement lorsque l'élément à déplacer effectue un mouvement non rectiligne, ce qui est le cas du profilé 9, mais également dans le cas contraire (profilé 8) en raison des inévitables défauts d'alignement au montage.

Pour modifier la position longitudinale ou l'assiette du siège, on fait tourner le câble 16 correspondant, ce qui modifie l'allongement du vérin 10 associé, comme décrit dans le brevet précité. La souplesse des câbles 16 permet de disposer leurs dispositifs d'actionnement aux endroits les plus appropriés, en particulier en dehors de la région du soubassement du siège.

Les Fig. 6 et 7 montrent que le vérin 10 peut être entraîné directement par un moteur électrique 32, porté par la noix 15 et monté coulissant sur celle-ci, d'une façon analogue à ce qui est décrit dans le brevet français précité.

Pour cela, la noix 15 porte à son sommet une nervure longitudinale 33 qui sert de guidage à un rail vertical 34 fixé au corps du moteur 32, la nervure 33 traversant une boutonnière centrale 35 du rail 33. La vis intermédiaire 14 est moulée, et son extrémité fermée 36 est attaquée par l'organe de sortie du réducteur 37 combiné au moteur 32 tout en étant liée en translation à cet organe.

Ainsi, lorsque le moteur 32 tourne, la noix 15 reprend le couple de réaction, et la vis 14 est entraînée en rotation et assure le déplacement de la glissière 8 ou 9 par rapport au point fixe 12. Le moteur se déplace avec la vis 14, à côté de celle-ci. La courte longueur du dispositif, notamment en position d'extension, permet de le loger en entier, y compris le moteur 32, sous la partie avant d'un siège, là où la flèche de l'assise est faible.

**Revendications**

1. Dispositif de réglage de la position d'un élément déplaçable tel qu'un siège dans un véhicule, du type comprenant un vérin à vis (10) connecté entre un point fixe (13) solidaire de la carrosserie du véhicule et un point solidaire de l'élément déplaçable (8, 9) et composé d'au moins trois pièces télescopiques (11, 14, 15) dont les filetages respectifs sont à pas contraires, et un dispositif d'entraînement en rotation (16, 32) couplé à une pièce intermédiaire (14) du vérin à vis tout en étant déplaçable avec ladite pièce intermédiaire en translation parallèlement à l'axe du vérin, ce dispositif étant caractérisé en ce que la pièce extérieure (15) du vérin (10) comprend un manchon (17) ouvert à ses deux extrémités et traversé par ladite pièce intermédiaire (14), et une collerette (18) tangente à ce manchon et montée rotative, perpendiculairement à l'axe du manchon, dans une pièce de fixation (25) fixée à l'élément déplaçable (8, 9).

2. Dispositif suivant la revendication 1, caractérisé en ce que la pièce de fixation (25) est une coupelle soudée à l'élément déplaçable (8, 9).

3. Dispositif suivant la revendication 2, caractérisé en ce que la coupelle (25) comporte un rebord de retenue (28) et un collet central de centrage (30) engagé dans une gorge circulaire (20) de la collerette (18).

4. Dispositif suivant la revendication 3, caractérisé en ce qu'un organe élastique (31) est comprimé entre l'élément déplaçable (8, 9) et la collerette (18) pour presser celle-ci contre le rebord (28) de la coupelle (25).

5. Dispositif suivant l'une des revendications 3 et 4, caractérisé en ce que le manchon (17) présente un épaulement (24) en regard du rebord de retenue (28) de la coupelle (25).

6. Dispositif suivant l'une quelconque des revendications 3 à 5, caractérisé en ce que la coupelle (25), le manchon (17) et la collerette (18) présentent une forme circulaire tronquée par deux plans parallèles diamétralement opposés.

7. Dispositif suivant l'une quelconque des revendications 1 à 6, caractérisé en ce qu'un câble d'actionnement (16) est fixé d'une part à une extrémité de ladite pièce intermédiaire (14), d'autre part à un dispositif d'entraînement en rotation.

8. Dispositif suivant la revendication 7, caractérisé en ce que ladite extrémité de la pièce intermédiaire (14) est son extrémité avant.

9. Dispositif suivant l'une quelconque des revendications 1 à 6, caractérisé en ce qu'une extrémité de ladite pièce intermédiaire (14) est attaquée par l'organe de sortie d'un moto-réducteur (32, 37) dont le corps est monté coulissant sur la pièce extérieure (15) du vérin, ladite extrémité et ledit organe de sortie étant solidaires en translation.

## Claims

1. A device for regulating the position of a movable element, such as a seat in a vehicle, of the type comprising a screw jack (10) connected between a fixed point (13) rigid with the body of the vehicle and a point rigid with the movable element (8, 9) and comprising at least three telescopic members (11, 14, 15) whose respective screwthreads are of opposite directions, and a device (16, 32) for driving in rotation coupled to an intermediate member (14) of the screw jack while being movable with said intermediate member in translation in a direction parallel to the axis of the jack, said device being characterized in that the outer member (15) of the jack (10) comprises a sleeve (17) which is open at both ends and through which said intermediate member (14) extends, and a flange (18) which is tangent to said sleeve and rotatively mounted in a direction perpendicular to the axis of the sleeve in a fixing member (25) fixed to the movable element (8, 9).

2. A device according to claim 1, characterized in that the fixing member (25) is a cup welded to the movable element (8, 9).

3. A device according to claim 2, characterized in that the cup (25) comprises a retaining ledge (28) and a centering centre collar (30) engaged in a circular groove (20) in the flange (18).

4. A device according to claim 3, characterized in that an elastically yieldable means (31) is compressed between the movable element (8, 9) and the flange (18) so as to urge the flange against the ledge (28) of the cup (25).

5. A device according to claim 3 or 4, characterized in that the sleeve (17) has a shoulder (24) confronting the retaining ledge (26) of the cup (25).

6. A device according to any one of the claims 3 to 5, characterized in that the cup (25), the sleeve (17) and the flange (18) have a circular shape truncated by two diametrally opposed parallel planes.

7. A device according to any one of the claims 1 to 6, characterized in that an actuating cable (16) is fixed to one end of said intermediate member (14) and to a device for driving in rotation.

8. A device according to claim 7, characterized in that said end of the intermediate member (14) is the front end thereof.

9. A device according to any one of the claims 1 to 6, characterized in that one end of said intermediate member (14) is engaged by the output member of a motorspeed reducer unit (32, 37) whose body is slidably mounted on the outer member (15) of the jack, said one end and said output member being connected to move together in translation.

## Ansprüche

1. Vorrichtung zur Einstellung der Position eines verschiebbaren Elementes, beispielsweise eines Sitzes in einem Fahrzeug, mit einer Schraubenwinde (10) zwischen einem Festpunkt (13), der fest mit der Fahrzeugkarosserie verbunden ist, und einem Punkt, der fest mit dem verschiebbaren Element (8, 9) verbunden ist, wobei die Schraubenwinde (10) aus mindestens drei teleskopisch bewegbaren Stücken besteht, deren jeweiligen Gewinde gegenläufig sind, sowie mit einer drehenden Mitnahme- bzw. Antriebseinrichtung (16, 32), welche an ein Zwischenstück (14) der Schraubenwinde gekoppelt und zusammen mit dem Zwischenstück parallel zur Achse der Schraubenwinde bewegbar ist, dadurch gekennzeichnet, daß das Außenstück (15) der Schraubenwinde (10) eine Hülse (17) umfaßt, die an ihren beiden Enden offen ist und durch welche das Zwischenstück (14) hindurchgeht, sowie einen Bund (18), der mit der Hülse in Berührung steht und drehbar, senkrecht zur Hülsenachse, in einem Befestigungsstück (25) angeordnet ist, welches an dem verschiebbaren Element (8, 9) befestigt ist.

2. Vorrichtung nach Anspruch 1, dadurch gekennzeichnet, daß das Befestigungsstück (25) eine mit dem verschiebbaren Element (8, 9) verschweißte Schale ist.

3. Vorrichtung nach Anspruch 2, dadurch gekennzeichnet, daß die Schale einen äußeren Rand (28) sowie einen mittigen Zentrierrand (30) aufweist, der an einem zylindrischen Durchlaß (20) des Bundes (18) angeordnet ist.

4. Vorrichtung nach Anspruch 3, dadurch gekennzeichnet, daß zwischen dem verschiebbaren Element (8, 9) und dem Bund (18) ein elastisches Element (31) angeordnet ist, um den Bund gegen den Rand (28) der Schale zu drücken.

5. Vorrichtung nach einem der Ansprüche 3 und 4, dadurch gekennzeichnet, daß die Hülse (17) in bezug auf den äußeren Rand (28) der Schale eine Schulter (24) aufweist.

6. Vorrichtung nach einem der Ansprüche 3 bis 5, dadurch gekennzeichnet, daß die Schale, die Hülse (17) und der Bund (18) in zwei einander diametral gegenüberliegenden parallelen Ebenen ein Stück eines Kreises bilden.

7. Vorrichtung nach einem der Ansprüche 1 bis 6, dadurch gekennzeichnet, daß ein Betätigungsseil (16) einerseits an einem Ende des Zwischenstücks (14) und andererseits an einer drehenden Mitnahme- bzw. Antriebsvorrichtung befestigt ist.

8. Vorrichtung nach Anspruch 7, dadurch gekennzeichnet, daß das Ende des Zwischenstücks (14) dessen vorderes Ende ist.

9. Vorrichtung nach einem der Ansprüche 1 bis 6, dadurch gekennzeichnet, daß ein Ende des Zwischenstücks (14) mit dem Antriebselement eines Getriebemotors (32, 37) verbunden ist, der gleitend an dem außenstück (15) des Schraubengewindes angeordnet ist, wobei das Ende und das Antriebselement translatorisch fest miteinander verbunden sind.

FIG.1

FIG.2

FIG.3

FIG.5

FIG.4

FIG.6

FIG.7

0 052 545